# EUROPÄISCHE PATENTANMELDUNG

(11) **EP 4 140 722 A1**
(43) Veröffentlichungstag der Anmeldung: **01.03.2023**
(21) Anmeldenummer: 21193860.0
(22) Anmeldetag: 30.08.2021
(51) Int. Cl.: B32B 3/06, B32B 13/12, B32B 15/08, B32B 15/18, B32B 15/20, B32B 17/10, B32B 19/04, B32B 27/08, B32B 27/28, B32B 27/30, B32B 27/32, B32B 27/34, B32B 27/36, B44C 1/10, B44C 5/04

(54) **DEKORELEMENT**

(71) Anmelder: Hueck Folien Gesellschaft m.b.H., 4342 Baumgartenberg (AT)
(72) Erfinder: FUCHSBAUER, Anita, 4030 Linz (AT); EGGINGER, Martin, 4040 Linz (AT); TRASSL, Stephan, 4342 Baumgartenberg (AT); LORRET, Olivier, 4482 Ennsdorf (AT)
(74) Vertreter: Burger, Hannes

(57) **Zusammenfassung**

Die Erfindung betrifft ein Dekorelement (1), sowie einen Bauteilverbund (16), wobei das Dekorelement (1) eine Trägerschicht (2) und eine an der Trägerschicht (2) angeordnete Deckschicht (3) umfasst. Dabei ist vorgesehen, dass das Dekorelement (1) zumindest ein recyceltes Material (4), und/oder zumindest ein Material aus nachwachsenden Rohstoffen, und/oder zumindest ein biologisch und/oder marin abbaubares Material (5) umfasst.

## Beschreibung

Die Erfindung betrifft ein Dekorelement umfassend eine Trägerschicht und eine an der Trägerschicht angeordnete Deckschicht, sowie einen Bauteilverbund umfassend das Dekorelement und einen Gegenstand.

Eine Dekorfolie eingangs genannter Art ist der Fachwelt beispielsweise durch die WO 2020/234301 A1 bekannt geworden.

Folienartige Dekorelemente dienen unter anderem der Oberflächengestaltung unterschiedlichster Gegenstände bzw. Bauteile oder Tragkörper, insbesondere von flächigen Bauteilen. Somit werden beispielsweise Metall- oder Kunststoff-Oberflächen, aber auch Oberflächen aus Holz, Holz-Verbundwerkstoffen, Glas, Keramik, anorganischen Baustoffen wie Beton oder Eternit, oder aus Zellulose haltige Materialien, mittels Dekorelementen mit optisch ansprechenden Designs versehen. Dazu werden Dekorelemente an Oberflächen bzw. Flachseiten von Gegenständen bzw. von Bauteilen oder Tragkörpern aufgebracht bzw. angeordnet. Folienartige Dekorelemente müssen demnach - neben einer ansprechenden Optik - hohe Anforderungen im Hinblick auf eine Haftung und zudem eine falten- und blasenfreie Anbringbarkeit an einer Oberfläche bzw. Flachseite eines Gegenstandes bzw. Tragkörpers erfüllen.

Um all diese Aufgaben zu erfüllen, bestehen Dekorelemente üblicherweise aus einer Mehrzahl an miteinander verbundenen Schichten bzw. Folien aus verschiedenen Materialien, und können daher von einem Endverbraucher in der Regel nicht gesondert entsorgt werden. Dadurch kommt es bei der Entsorgung von mit Dekorelementen versehenen Gegenständen oftmals zu einer Kontamination der Entsorgungsfraktion. Beispielsweise gelangen bei der Entsorgung von Verpackungen mit Kunststoff-enthaltenden Dekorfolien ebendiese Kunststoffe unerwünschter Weise in den Papierabfall.

Aufgabe der vorliegenden Erfindung war es, die noch bestehenden Nachteile des Standes der Technik zu überwinden und die Nachhaltigkeit von Dekorelementen weiter zu verbessern, wobei zugleich die geforderten technischen Eigenschaften der Dekorelemente nicht beeinträchtigt werden.

Diese Aufgabe wird durch ein Dekorelement gemäß den Ansprüchen gelöst.

Es sei darauf hingewiesen, dass der Begriff "insbesondere" in diesem Dokument so zu verstehen ist, dass es sich dabei um eine mögliche speziellere Ausbildung oder nähere Spezifizierung eines Gegenstands handeln kann, aber nicht unbedingt eine zwingende, bevorzugte Ausführungsform desselben oder eine zwingende Vorgehensweise darstellen muss.

In ihrer vorliegenden Verwendung sollen die Begriffe "umfassend", "weist auf, "aufweisend", "schließt ein", "einschließlich", "enthält", "enthaltend" und jegliche Variationen dieser eine nicht ausschließliche Einbeziehung abdecken.

An dieser Stelle sei auch darauf hingewiesen, dass der Begriff Schicht im Kontext der Erfindung sowohl eine einzelne Schicht als auch einen Verbund oder eine Schichtung aus mehreren Schichten beschreiben kann. Dabei kann es sich beispielsweise um mehrere gleichartige, aber auch um mehrere verschiedenartige Schichten oder Lagen handeln. Dasselbe gilt für den Begriff Folie. Es sei auch darauf hingewiesen, dass unter "Beschichten" in diesem Dokument sowohl ein mittelbares als auch ein unmittelbares Beschichten verstanden wird. In diesem Sinne bedeutet in dem gesamten Dokument "eine erste Schicht ist mit einer zweiten Schicht beschichtet" sowohl, dass die zweite Schicht direkt und unmittelbar auf der ersten Schicht ohne Zwischenschicht aufgebracht ist und an dieser anliegt, als auch, dass zwischen der ersten Schicht und der zweiten Schicht Zwischenschichten, beispielsweise in Form von Haftvermittlern, etc., angeordnet sein können.

Die Erfindung betrifft ein Dekorelement, bei welchem vorgesehen ist, dass das Dekorelement zumindest ein recyceltes Material, und/oder zumindest ein Material aus nachwachsenden Rohstoffen, und/oder zumindest ein biologisch und/oder marin abbaubares Material umfasst.

In dem vorliegenden Zusammenhang werden unter Dekorelement insbesondere folienartige Dekorelemente bzw. Klebefolien verstanden. Dekorelemente umfassen dabei üblicherweise eine Trägerschicht, bzw. eine Träger- oder Basisfolie, welches als Trägermaterial für beispielsweise, diverse optisch wirksame Schichten, aber auch für funktionale Schichten, sowie für Druckschichten dient. Die Trägerschicht weist dabei zwei Flachseiten auf. Darüber hinaus umfassen Dekorelemente eine Deckschicht, welche ebenso zwei Flachseiten aufweist. Die Deckschicht und die Trägerschicht sind demnach jeweils als flächige Schicht ausgebildet und sind an ihren einander zugewandten Flachseiten miteinander verbunden. Oftmals sind Dekorelemente zudem mittels einer Haftschicht, Klebeschicht, Kaschierschicht bzw. Selbstklebeschicht an einer Oberfläche bzw. Flachseite eines Gegenstandes bzw. Tragkörpers dauerhaft oder bedarfsweise auch lösbar angebracht.

Bei dem zumindest einem recycelten Material kann es sich um jegliche Art von recycelbaren Materialien oder Materialzusammensetzungen handeln. Beispielsweise sind damit jegliche Arten von Kunststoffen umfasst, sowie auch Metalle, Metalllegierungen oder Metallverbindungen. Auch diverse chemische Zusammensetzungen können recycelbar sein und damit als recyceltes Material in dem Dekorelement umfasst sein. Weil Dekorelemente zumeist aus mehreren Schichten, Folien bzw. Komponenten aufgebaut sind, kann es dabei zweckmäßig sein, wenn in diesen Einzelbestandteilen verschiedene Arten von recyceltem Material eingesetzt werden.

Dabei kann es sein, dass das zumindest eine recycelte Material, und/oder das zumindest eine Material aus nachwachsenden Rohstoffen, und/oder das zumindest eine biologisch und/oder marin abbaubare Material in der Trägerschicht, in der Deckschicht und/oder in einer weiteren, auf oder unter der Trägerschicht applizierten Komponente, Schicht oder Folie, enthalten ist. Mit der Formulierung "unter der Trägerschicht" ist im Kontext der nachfolgenden Beschreibung gemeint, dass etwaige zusätzliche Komponenten, Schichten oder Folien auf der einer Oberfläche eines Gegenstandes zugewandten Seite der Trägerschicht angeordnet sind. Mit der Formulierung "auf der Trägerschicht" ist gemeint, dass etwaige zusätzliche Komponenten, Schichten oder Folien auf der einer Oberfläche eines Gegenstandes abgewandten, respektive auf der einer Sichtseite des Dekorelements zugewandten, Seite der Trägerschicht angeordnet sind.

Dadurch wird die Nachhaltigkeit des Dekorelements bzw. dessen gesamter Produktlebenszyklus verbessert, da durch den Einsatz des zumindest einen recycelten Materials eine nachhaltige Herstellung ermöglicht ist. Durch den Einsatz von zumindest einem recycelten Material bei der Herstellung von Dekorelementen werden Mittel geschaffen, welche den steigenden ökologischen Anforderungen entsprechen.

Durch den alternativen oder zusätzlichen Einsatz von zumindest einem Material aus nachwachsenden Rohstoffen und/oder von biologisch und/oder marin abbaubarem Material kann der nachhaltige Lebenszyklus des Dekorelements weiter verbessert werden. Darüber hinaus kann damit ein wertvoller Beitrag zum Umweltschutz geleistet werden. Bei dem Material aus nachwachsenden Rohstoffen bzw. bei dem biologisch und/oder marin abbaubaren Material kann es sich um ein anderes Material als dem recycelten Material handeln. Besonders nachhaltig ist es jedoch, wenn es sich bei dem Material aus nachwachsenden Rohstoffen bzw. bei dem biologisch und/oder marin abbaubaren Material um dasselbe Material handelt, wie dem recycelten Material.

Dabei können für die Synthese der entsprechenden chemischen Rohstoffe nachwachsende Rohstoffe eingesetzt werden. Kunststoffe können beispielsweise unterschieden werden in sogenannte Drop-Ins und neue biobasierte Kunststoffe. Unter Drops-Ins werden Biokunststoffe verstanden, welche auf nachwachsenden Rohstoffen basieren und bei denen bestehende Prozesse und Wertschöpfungsketten bei der Verarbeitung, der Nutzung und des Recyclings im Wesentlich unverändert bleiben (z.B. PA, PU, PE, PP, PET, etc.). Neue biobasierte Kunststoffe ersetzen Kunststoffe auf fossiler Basis (z.B. Thermoplastische Stärke (TPS), Polymilchsäure (PLA), Cellulose- oder Lignin-basierte Kunststoffe, etc.), wobei eine Nutzung als Alternative zu fossilbasierten Kunststoffen noch nicht für alle biobasierten Kunststoffe vollständig etabliert ist.

Biologisch abbaubare Kunststoffe bestehen aus Polymeren, die durch Mikroorgansimen unter bestimmten Bedingungen zersetzt werden können. Der Begriff "marin abbaubar" oder "marine degradable" bezieht sich auf die Möglichkeit eines natürlichen Abbaus unter marinen Umweltbedingungen. Zu biologisch abbaubaren und zudem biobasierten Kunststoffen zählen beispielsweise Polyhydroxyalkanoate (PHA), oder thermoplastische Stärke (TPS). Zu biologisch abbaubaren Kunststoffen zählen beispielsweise Polymilchsäure (PLA), Polycaprolacton (PCL), Polybutylensuccinat (PBS), oder Polybutylenadipat-terephthalat (PBAT).

Durch den Einsatz von nachhaltig hergestellten Rohfolien und/oder Rohstoffen beispielsweise als Beschichtungsstoffe, können Dekorelemente nachhaltig hergestellt werden, ohne die geforderten technischen Eigenschaften wie beispielsweise Optik, Haftwirkung an Oberflächen, Bedruckbarkeit der Basis- oder Deckschicht, oder einer auf der oder in die Deckschicht applizierten Schicht, zu beeinträchtigen.

Gemäß einer vorteilhaften Weiterbildung kann eine Verbindungsschicht vorgesehen sein, mittels welcher die Deckschicht mit der Trägerschicht verbunden ist. Bevorzugt umfasst die Verbindungsschicht zumindest ein recyceltes Material, und/oder zumindest ein Material aus nachwachsenden Rohstoffen, und/oder zumindest ein biologisch und/oder marin abbaubares Material. Damit wird die Möglichkeit geschaffen, eine gute und dauerhafte Verbindung zwischen den zu verbindenden Schichten sicher zu stellen. Eine weitere bevorzugte Ausführungsform ist dadurch gekennzeichnet, dass die Verbindungsschicht durch ein Kaschiermittel, insbesondere durch einen Kaschierklebstoff, einen Kaschierlack oder einen Kaschierleim, gebildet ist. Damit kann eine gute und stabile gegenseitige Verbindung geschaffen werden.

Des Weiteren kann es zweckmäßig sein, wenn das Dekorelement mindestens 10%, bevorzugt mindestens 20%, besonders bevorzugt mindestens 30%, insbesondere mindestens 50% des zumindest einen recycelten Materials und/oder des zumindest einen Materials aus nachwachsenden Rohstoffen und/oder des zumindest einen biologisch und/oder marin abbaubaren Materials umfasst oder wenn das Dekorelement mindestens 10%, bevorzugt mindestens 20%, besonders bevorzugt mindestens 30%, insbesondere mindestens 50% mehrerer recycelter Materialien und/oder mehrerer Materialien aus nachwachsenden Rohstoffen und/oder mehrerer biologisch und/oder marin abbaubarer Materialien umfasst.

Ferner kann vorgesehen sein, dass das zumindest eine recycelte Material, und/oder das zumindest eine Material aus nachwachsenden Rohstoffen, und/oder das zumindest eine biologisch und/oder marin abbaubare Material ein Cellulosefaser-freies Material ist.

Darüber hinaus kann vorgesehen sein, dass das das Dekorelement, insbesondere die Trägerschicht, mit zumindest einer Kunststoff-Folie, oder als Kunststoff-Folie ausgebildet ist, welche Kunststoff-Folie das zumindest eine recycelte Material und/oder das zumindest eine Material aus nachwachsenden Rohstoffen und/oder das zumindest eine biologisch und/oder marin abbaubare Material umfasst. Bei der Kunststoff-Folie kann es sich beispielsweise um eine polymere Trägerfolie oder um ein Polymersubstrat handeln, auf dem gegebenenfalls weitere Schichten wie Dekorschichten, Schutzlacke, Heißsiegellacke, Kleber, etc. aufgebracht sein können.

Vorteilhaft ist auch eine Ausprägung, gemäß welcher vorgesehen sein kann, dass das zumindest eine recycelte Material und/oder das zumindest eine biologisch und/oder marin abbaubare Material einen chemisch recycelten Kunststoff und/oder einen mechanisch recycelten Kunststoff umfasst, insbesondere einen lichtdurchlässigen, recycelten Kunststoff umfasst, wobei das zumindest eine recycelte Material und/oder das zumindest eine biologisch und/oder marin abbaubare Material bevorzugt zumindest eines der Materialien aus der Gruppe Polyimid (PI), Polypropylen (PP), monoaxial orientiertem Polypropylen (MOPP), biaxial orientierten Polypropylen (BOPP), Polyethylen (PE), Polyphenylensulfid (PPS), Polyetheretherketon (PEEK), Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Glycol-modifiziertes Polyethylenterephthalat (G-PET), amorphes Polyethylenterephthalat (A-PET), Polyamid (PA), Polycarbonat (PC), Cycloolefincopolymere (COC), Polyoximethylen (POM), Acrylnitril-butadien-styrol (ABS), Polyvinylchlorid (PVC) Ethylentetrafluorethylen (ETFE), Polytetrafluorethylen (PTFE), Polyvinylfluorid (PVF), Polyvinylidenfluorid (PVDF), Ethylen-Tetrafluorethylen-Hexafluorpropylen-Fluorterpolymer (EFEP), Polymethylmethacrylat (PMMA), Cellulose- oder Lignin-basierte Kunststoffe, Polyhydroxyalkanoate (PHA), thermo-plastische Stärke (TPS), Polymilchsäure (PLA), Polycaprolacton (PCL), Polybuty-lensuccinat (PBS), und Polybutylenadipat-terephthalat (PBAT) und/oder Mischungen und/oder Co-Polymere und/oder Verbundmaterialien dieser Materialien umfasst oder aus zumindest einem dieser Materialien hergestellt ist. Bevorzugt kann das Dekorelement, insbesondere die Trägerschicht, wie zuvor beschrieben, mit zumindest einer Kunststoff-Folie, oder als Kunststoff-Folie, beispielsweise als polymere Trägerfolie als Polymersubstrat ausgebildet sein, und diese Kunststoff-Folie eines oder mehrere der gelisteten Materialien umfassen.

Mit chemischem Recycling sind Verfahren gemeint, bei welchen Kunststoffe durch thermische Einwirkung bzw. Energieeinwirkung bzw. durch chemische Prozesse in kürzere Moleküle aufgespalten werden, sodass ein erneuter Einsatz in nachfolgenden Herstellungsverfahren wie beispielsweise in einer Polymerisation, möglich ist. Einem chemischen Recycling können beispielsweise sogenannte PCR-Kunststoffe ("post consumer recycling"), PIR-Kunststoffe ("post industrial recycling"), sowie CCU-Kunststoffe ("carbon capture and utilization") zugeführt werden.

Zur Herstellung von PCR-Kunststoffen werden Kunststoffabfälle nach dem Endverbrauch wieder in Rohstoffe oder Monomere für die Herstellung neuer Rohstoffe verwendet und daraus beispielsweise Polymer-Folien oder Lackbestandteile hergestellt. So können z.B. PET-, PE- und PP-Folien mit einem gewissen Anteil an PCR-Rohstoffen bezogen werden. Die Herstellung von PIR-Kunststoffen erfolgt zumeist im Wesentlichen analog zur Herstellung von PCR-Kunststoffen. Allerdings kommen dabei Industrieabfälle zum Einsatz, welche in der Regel weniger stark verunreinigt bzw. sortenreiner sind. Zur Herstellung von CCU-Kunststoffen wird Kohlendioxid aus Abgasströmen oder aus der Luft abgeschieden und dient dann als Rohstoff bzw. Baustein für die Herstellung von Energieträgern wie Methan oder Methanol oder für die Herstellung von chemischen Rohstoffen wie Polycarbonaten oder PVC. Hierzu sind sowohl chemische, als auch biologische Verfahren mit Algen oder Mikroorganismen bekannt.

Mechanisch recycelter Kunststoff kann im Zuge eines stofflichen Recyclings gewonnen werden. Unter anderem können PCR-Kunststoffe und PIR-Kunststoffe mechanisch recycelt werden. Kunststoffabfälle werden nach der jeweiligen Kunststoffart sortiert und zu Rezyklaten aufbereitet, welche als Ausgansstoff für neue Produkte dienen können und damit Kunststoffe aus Neumaterialien ersetzten können. Bei dieser Art des Recyclings bleibt die ursprüngliche chemische Struktur der Polymere erhalten.

Gemäß einer Weiterbildung ist es möglich, dass das zumindest eine recycelte Material und/oder das zumindest eine biologisch und/oder marin abbaubare Material zumindest ein recyceltes metallisches Material, insbesondere ausgewählt aus der Gruppe Silber, Kupfer, Aluminium, Gold, Platin, Niob, Zinn, oder aus Nickel, Titan, Vanadium, Chrom, Kobalt und Palladium oder Legierungen dieser Materialien, insbesondere Kobalt-Nickel-Legierungen, und/oder zumindest ein dielektrisches Material, insbesondere ausgewählt aus der Gruppe Zinksulfid (ZnS), Zinkoxid (ZnO), Zinkchromat (ZnCrO₄), Titandioxid (TiO₂), Kohlenstoff (C), Indiumoxid (In₂O₃), Indium-Zinn-Oxid (ITO), Antimon-Zinn-Oxid (ATO), Fluor-Zinn-Oxid (FTO), Tantalpentoxid (Ta₂O₅), Ceroxid (CeO₂), Yttriumoxid (Y₂O₃), Europiumoxid (Eu₂O₃), Eisenoxide wie zum Beispiel Eisen(II,III)oxid (Fe₃O₄) und Eisen(III)oxid (Fe₂O₃), Hafniumnitrid (HfN), Hafniumcarbid (HfC), Hafniumoxid (HfO₂), Lanthanoxid (La₂O₃), Magnesiumoxid (MgO), Neodymoxid (Nd₂O₃), Praseodymoxid (Pr₆O₁₁), Samariumoxid (Sm₂O₃), Antimontrioxid (Sb₂O₃), Siliziumcarbid (SiC), Siliziumnitrid (Si₃N₄), Siliziummonoxid (SiO), Selentrioxid (Se₂O₃), Zinnoxid (SnO₂), Wolframtrioxid (WO₃), Bismut(III)oxid (Bi₂O₃), Aluminiumoxid (Al₂O₃), Metallfluoride, beispielsweise Magnesiumfluorid (MgF₂), Aluminiumfluorid (AlF₃), Cerfluorid (CeF₃), Natrium-Aluminium-Fluoride (z.B. Na₃AlF₆ oder Na₅Al₃F₁₄), Siliziumoxid (SIOₓ), Siliziumdioxid (SiO₂), Neodymfluorid (NdF3), Lanthanfluorid (LaF₃), Samariumfluorid (SmF₃), Bariumfluorid (BaF₂), Calciumfluorid (CaF₂), Lithiumfluorid (LiF), organische Monomere und/oder organische Polymere oder Schichten aus Metalloxiden, wie beispielsweise unstöchiometrisches Aluminiumoxid, Kupferoxide, oder Chromoxide umfasst und/oder aus zumindest einem recycelten metallischen Material aus Druckfarben oder Lacken oder Tinten mit zumindest einem dieser Materialien, hergestellt ist. Das recycelte metallische Material kann beispielsweise auf oder in Druckfarben, Lacken bzw. Tinten auf- bzw. eingebracht werden.

Durch den Einsatz von nachhaltigen Rohstoffen für verschiedene Beschichtungsstoffe (z.B. Lackbestandteile, Metalle wie Aluminium aus recyceltem Aluminium, etc.) ist es möglich geworden, nachhaltige Dekorelemente herzustellen.

Weiters kann es vorteilhaft sein, wenn die Deckschicht 3 an ihrer der Trägerschicht 2 zugewandten Seite eine als Folie ausgebildete Decklage 9 umfasst, und wenn an der der Trägerschicht 2 abgewandten Seite dieser Decklage 9 eine Dekorlage 10, insbesondere ein Druckbild, aufgebracht oder angeordnet ist. Es kann aber auch vorteilhaft sein, wenn die Dekorlage, insbesondere das Druckbild, in der Decklage aufgenommen ist. Damit kann eine hohe optische Gestaltungsmöglichkeit und/oder eine Anpassung des Dekorelements an die unterschiedlichste Anwendungsfälle geschaffen werden. Bei der Dekorlage bzw. bei dem Druckbild kann es sich beispielsweise um einen aufgedruckten Lack, eine aufgedruckte Tinte, oder auch um ein aufgedrucktes und in flüssiger Form vorliegendes Metall bzw. eine Metalllegierung handeln.

Eine mögliche alternative Ausbildung sieht vor, dass die Deckschicht durch eine Dekorlage gebildet ist, insbesondere durch ein Druckbild gebildet ist. Damit kann ein relativ dünnwandiger Folienaufbau geschaffen werden, welcher darüber hinaus auch noch in seinem optischen Erscheinungsbild unterschiedlich gestaltet werden kann.

Gemäß einer zweckmäßigen Weiterbildung kann es sein, dass an der der Trägerschicht abgewandten Seite der Deckschicht eine Schutzschicht, insbesondere aus einem Lack, beispielsweise aus einem UV-gehärteten Klarlack, oder aus einem eine matte Optik erzeugenden Excimerlack, gebildet ist, welche Schutzschicht bevorzugt auf die Dekorlage aufgebracht ist, und welche Schutzschicht das zumindest eine recycelte Material und/oder das zumindest eine Material aus nachwachsenden Rohstoffen und/oder das zumindest eine biologisch und/oder marin abbaubare Material umfasst. Die Seite, auf welcher der Schutzlack aufgebracht wird, wird hierbei so gewählt, dass die Schutzschicht bei der applizierten Dekorfolie außen liegt. Bevorzugt weist der Lack zum Schutz des Dekorelements vor mechanischen Beschädigungen eine hohe Kratzfestigkeit auf. Der UV-härtende Lack kann beispielsweise ein radikalisch polymerisierbarer UV-Lack auf Basis von Acrylmonomeren, oder ein Lack auf Basis von Urethanmonomeren sein, oder Ausgangsstoffe für Fluorpolymere umfassen. Zum Applizieren des Lackes können insbesondere Schlitzdüsen zur Anwendung kommen, sodass eine homogene Schichtqualität, insbesondere für glänzende Applikationen, erzielbar ist.

Weiters ist es auch denkbar, dass die von der Deckschicht abgewandte Seite der Trägerschicht mit einer Siegelschicht, insbesondere aus einem Kunststoff, beschichtet ist, sodass die Trägerschicht zwischen der Deckschicht und der Siegelschicht angeordnet ist. Alternativ kann es sein, dass die Deckschicht mit der Siegelschicht beschichtet ist, oder dass die Deckschicht selbst die Siegelschicht bildet. Dabei umfasst die Siegelschicht das zumindest eine recycelte Material und/oder das zumindest eine Material aus nachwachsenden Rohstoffen und/oder das zumindest eine biologisch und/oder marin abbaubare Material. Die Funktion der Siegelschicht besteht bevorzugt darin, Unebenheiten der Oberfläche des Gegenstandes, auf welches das Dekorelement aufgebracht werden kann, auszugleichen. Besonders bevorzugt handelt es sich bei der Siegelschicht um ein fugenfüllendes Material. Zum Verkleben des Dekorelements mit der Oberfläche eines Gegenstandes, beispielsweise einer Möbelfront, etc. kann noch zusätzlich eine Klebeschicht auf die Siegelschicht aufgebracht werden. Abhängig von der Oberfläche des Gegenstandes kann die Siegelschicht selbst schon an der Oberfläche kleben bzw. dauerhaft haften, ohne dass hierfür ein weiterer Kleber zum Einsatz kommen muss. So kann beispielsweise bei Gegenständen mit einer Oberfläche aus Kunststoff auf einen Kleber verzichtet werden, während bei Metalloberflächen die Verwendung eines zusätzlichen Klebers vorteilhaft sein kann.

Weiters kann vorgesehen sein, dass an der von der Deckschicht abgewandten Seite der Trägerschicht eine Haftschicht bzw. eine Kaschierschicht anordenbar oder angeordnet ist, welche Haftschicht an einer Oberfläche eines metallischen und/oder eines polymeren Gegenstandes anbringbar ist, und welche Haftschicht bevorzugt zumindest ein recyceltes Material, und/oder zumindest ein Material aus nachwachsenden Rohstoffen, und/oder zumindest ein biologisch und/oder marin abbaubares Material umfasst, wobei die Trägerschicht eine Kunststoff-Folie mit zumindest 20% PCR-Material, bevorzugt mit zumindest 50% PCR-Anteil, ist. Es wäre aber auch denkbar und gegebenenfalls zweckmäßig, wenn anstatt des PCR-Materials ein anderes recyceltes und/oder aus nachwachsenden Rohstoffen hergestelltes und/oder biologisch und/oder marin abbaubares Kunststoffmaterial eingesetzt wird. So ist es möglich, sowohl Metalloberflächen, als auch Kunststoffoberflächen durch Aufbringung eines oder mehrerer Dekorelemente auf nachhaltige Art und Weise zu kaschieren und somit zu dekorieren.

Die Aufgabe der Erfindung wird aber eigenständig auch durch einen Bauteilverbund gelöst, welcher einen insbesondere plattenförmig ausgebildeten Gegenstand mit zumindest einer Oberfläche bzw. mit zumindest einer Tragkörper-Flachseite und zumindest ein Dekorelement umfasst. Das erfindungsgemäß ausgebildete zumindest eine Dekorelement ist an der zumindest einen Oberfläche angeordnet und mit dem Gegenstand verbunden.

Eine weitere Ausbildung sieht vor, dass der Gegenstand bzw. Tragkörper aus einem Werkstoff aus der Gruppe von Holz, Holz-Verbundwerkstoff, Kunststoff, Glas, Metall, Keramik, anorganischen Baustoffen wie Beton, Eternit, oder Zellulose haltige Materialien gewählt ist, und dass der Werkstoff bevorzugt zumindest ein recyceltes Material, und/oder zumindest ein Material aus nachwachsenden Rohstoffen, und/oder zumindest ein biologisch und/oder marin abbaubares Material umfasst. Damit wird die Möglichkeit geschaffen, auf unterschiedlichste Werkstoffe und abhängig vom jeweiligen Einsatzzweck, zurückgreifen zu können. Dies insbesondere dann, wenn es sich bei dem plattenförmigen Gegenstand um Möbelfronten aus Furniermaterial handelt. Dabei ist es denkbar, dass die Furnierplatte auf ihrer Sichtseite eine zumindest partiell aus recyceltem PET bestehende PET-Platte oder G-PET-Platte aufweist, und dass auf dieser PET- und G-PET-Platte das Dekorelement appliziert ist.

Eine andere Ausführungsform zeichnet sich dadurch aus, dass das zumindest eine Dekorelement an den plattenförmig ausgebildeten Gegenstand bzw. Tragkörper angeformt, insbesondere auf den Tragkörper aufextrudiert, ist. Damit kann eine Inline-Fertigung ermöglicht werden. Das unmittelbar hergestellte Dekorelement kann so ohne jeglichen Zwischenschritt direkt an den Gegenstand an der dafür vorgesehenen Oberfläche bzw. dem dafür vorgesehenen Oberflächenabschnitt aufgebracht werden. Zumeist wird das Dekorelement bzw. die das Dekorelement bildenden Schichten in einem Extrusionsvorgang hergestellt.

Eine andere alternative Ausführungsform zeichnet sich dadurch aus, dass an der der Deckschicht abgewandten Seite der Trägerschicht eine Haftschicht bzw. eine Kaschierschicht angeordnet ist, und dass die Haftschicht bevorzugt zumindest ein recyceltes Material, und/oder zumindest ein Material aus nachwachsenden Rohstoffen, und/oder zumindest ein biologisch und/oder marin abbaubares Material umfasst, wobei die Trägerschicht eine Kunststoff-Folie mit zumindest 20% PCR-Material, bevorzugt mit zumindest 50% PCR-Anteil, ist. Es wäre aber auch denkbar und gegebenenfalls zweckmäßig, wenn anstatt des PCR-Materials ein anderes recyceltes und/oder aus nachwachsenden Rohstoffen hergestelltes und/oder biologisch und/oder marin abbaubares Kunststoffmaterial eingesetzt wird. Mittels der Haftschicht ist das Dekorelement mit dem Gegenstand bzw. Tragkörper verbunden. Damit wird ein nachträglicher Verbindungsvorgang des Dekorelements mit dem Gegenstand ermöglicht. Das die Haftschicht bildende Haftmittel weist zumeist einen zähflüssigen oder gelartigen Ausgangs-Aggregatzustand auf. Erst im Zuge des Aushärungsvorgangs oder Abbindevorgangs verfestigt sich dieses und stellt die Verbindungsschicht zwischen dem Dekorelement und dem Tragkörper dar.

Zum besseren Verständnis der Erfindung wird diese anhand der nachfolgenden Figuren näher erläutert.

Es zeigen jeweils in stark vereinfachter, schematischer Darstellung:
- Fig. 1: ein Dekorelement und einen Gegenstand in einer voneinander distanzierten Anordnung vor deren Verbindung zu einem Bauteilverbund in Schnittansicht,
- Fig. 2: einen Bauteilverbund umfassend ein Dekorelement und einen Gegenstand in Schnittansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

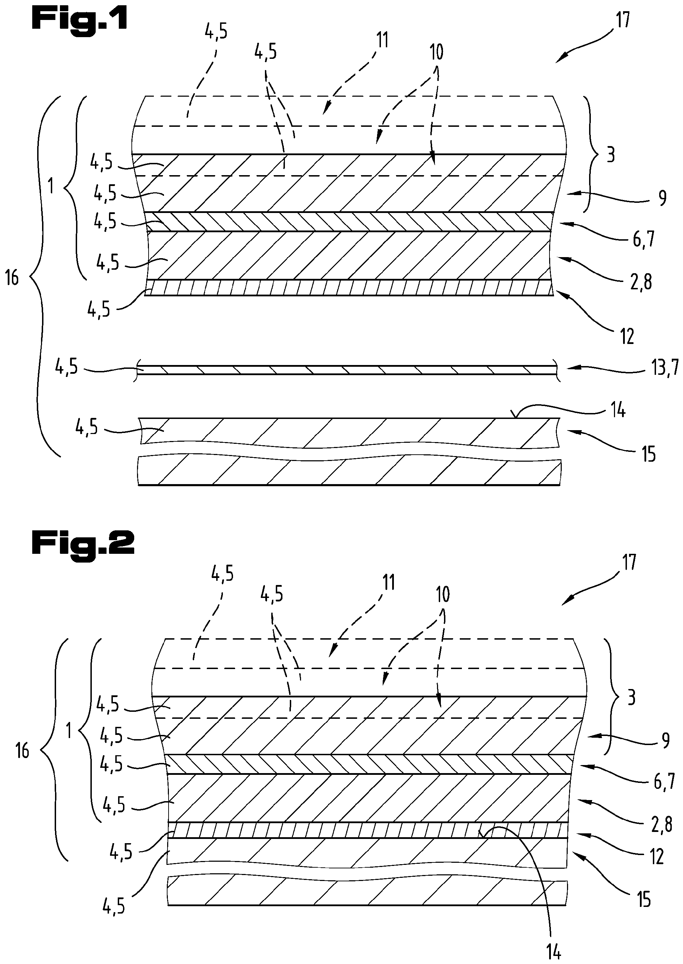

Die Fig. 1 und 2 werden nachfolgend weitgehend in einer Zusammenschau beschrieben, um unnötige Wiederholungen zu vermeiden. In den Fig. 1 und 2 ist ein Ausführungsbeispiel eines Dekorelements 1 und ausschnittsweise eines Gegenstandes 15 gezeigt, wobei das folienartige Dekorelement 1 in einer von dem Gegenstand 15 distanzierten Anordnung bzw. vor dessen Verbindung mit dem Gegenstand 15 zu einem Bauteilverbund 16 gezeigt wird. In der Fig. 2 ist ein Bauteilverbund 16 gezeigt, bzw. ist das Dekorelement 1 in seinem mit dem Gegenstand 15 verbunden bzw. aufgeklebten oder applizierten Zustand darstellt.

Das Dekorelement 1 umfasst eine Trägerschicht 2 und eine an der Trägerschicht 2 angeordnete Deckschicht 3. Dabei ist vorgesehen, dass das Dekorelement 1, insbesondere die Trägerschicht 2 oder die Deckschicht 3, zumindest ein recyceltes Material 4, und/oder zumindest ein Material aus nachwachsenden Rohstoffen, und/oder zumindest ein biologisch und/oder marin abbaubares Material 5 umfasst.

Gemäß dem gezeigten Beispiel kann an der der Sichtseite 17 des Dekorelements 1 zugewandten Seite der Trägerschicht 2 eine Verbindungsschicht 6 bzw. ein Kaschiermittel 7 vorgesehen sein. Mittels der Verbindungsschicht 6 sind die Deckschicht 3 und die Trägerschicht 2 miteinander verbunden. Bevorzugt umfasst die Verbindungsschicht 6 zumindest ein recyceltes Material 4, und/oder zumindest ein Material aus nachwachsenden Rohstoffen, und/oder zumindest ein biologisch und/oder marin abbaubares Material 5.

Das dargestellte Dekorelement 1 umfasst mindestens 10%, bevorzugt mindestens 20%, besonders bevorzugt mindestens 30%, insbesondere mindestens 50% des zumindest einen recycelten Materials 4 und/oder des zumindest einen Materials aus nachwachsenden Rohstoffen und/oder des zumindest einen biologisch und/oder marin abbaubaren Materials 5 umfasst.

Das zumindest eine recycelte Material 4, und/oder das zumindest eine Material aus nachwachsenden Rohstoffen, und/oder das zumindest eine biologisch und/oder marin abbaubare Material 5 kann insbesondere ein Cellulosefaser-freies Material sein.

Die Trägerschicht 2 ist mit zumindest einer Kunststoff-Folie 8, bzw. als Kunststoff-Folie 8 ausgebildet. Die Kunststoff-Folie 8 umfasst dabei das zumindest eine recycelte Material 4 und/oder das zumindest eine Material aus nachwachsenden Rohstoffen und/oder das zumindest eine biologisch und/oder marin abbaubare Material 5.

Zweckmäßigerweise ist das zumindest eine recycelte Material 4 und/oder das zumindest eine biologisch und/oder marin abbaubare Material 5 ein chemisch recycelter Kunststoff und/oder ein mechanisch recycelter Kunststoff, insbesondere ein lichtdurchlässiger, recycelter Kunststoff. Das zumindest eine recycelte Material 4 und/oder das zumindest eine biologisch und/oder marin abbaubare Material 5 umfasst dabei bevorzugt zumindest eines der Materialien aus der Gruppe Polyimid (PI), Polypropylen (PP), monoaxial orientiertem Polypropylen (MOPP), biaxial orientierten Polypropylen (BOPP), Polyethylen (PE), Polyphenylensulfid (PPS), Polyetheretherketon (PEEK), Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Glycol-modifiziertes Polyethylenterephthalat (G-PET), amorphes Polyethylenterephthalat (A-PET), Polyamid (PA), Polycarbonat (PC), Cycloolefincopolymere (COC), Polyoximethylen (POM), Acrylnitril-butadien-styrol (ABS), Polyvinylchlorid (PVC) Ethylentetrafluorethylen (ETFE), Polytetrafluorethylen (PTFE), Polyvinylfluorid (PVF), Polyvinylidenfluorid (PVDF) und Ethylen-Tetrafluorethylen-Hexafluorpropylen-Fluorterpolymer (EFEP), Polymethylmethacrylat (PMMA), Cellulose- oder Lignin-basierte Kunststoffe, Polyhydroxyalkanoate (PHA), thermoplastische Stärke (TPS), Polymilchsäure (PLA), Polycaprolacton (PCL), Polybuty-lensuccinat (PBS), und Polybutylenadipat-terephthalat (PBAT) und/oder Mischungen und/oder Co-Polymere und/oder Verbundmaterialien dieser Materialien oder ist aus zumindest einem dieser Materialien hergestellt.

Das zumindest eine recycelte Material 4 und/oder das zumindest eine biologisch und/oder marin abbaubare Material 5 umfassen in einer Ausführungsform zumindest ein recyceltes metallisches Material, insbesondere ausgewählt aus der Gruppe Silber, Kupfer, Aluminium, Gold, Platin, Niob, Zinn, oder aus Nickel, Titan, Vanadium, Chrom, Kobalt und Palladium oder Legierungen dieser Materialien, insbesondere Kobalt-Nickel-Legierungen, und/oder zumindest ein dielektrisches Material, insbesondere ausgewählt aus der Gruppe Zinksulfid (ZnS), Zinkoxid (ZnO), Zinkchromat (ZnCrO₄), Titandioxid (TiO₂), Kohlenstoff (C), Indiumoxid (In₂O₃), Indium-Zinn-Oxid (ITO), Antimon-Zinn-Oxid (ATO), Fluor-Zinn-Oxid (FTO), Tantalpentoxid (Ta₂O₅), Ceroxid (CeO₂), Yttriumoxid (Y₂O₃), Europiumoxid (Eu₂O₃), Eisenoxide wie zum Beispiel Eisen(II,III)oxid (Fe₃O₄) und Eisen(III)oxid (Fe₂O₃), Hafniumnitrid (HfN), Hafniumcarbid (HfC), Hafniumoxid (HfO₂), Lanthanoxid (La₂O₃), Magnesiumoxid (MgO), Neodymoxid (Nd₂O₃), Praseodymoxid (Pr₆O₁₁), Samariumoxid (Sm₂O₃), Antimontrioxid (Sb₂O₃), Siliziumcarbid (SiC), Siliziumnitrid (Si₃N₄), Siliziummonoxid (SiO), Selentrioxid (Se₂O₃), Zinnoxid (SnO₂), Wolframtrioxid (WO₃), Bismut(III)oxid (Bi₂O₃), Aluminiumoxid (Al₂O₃), Metallfluoride, beispielsweise Magnesiumfluorid (MgF₂), Aluminiumfluorid (AlF₃), Cerfluorid (CeF₃), Natrium-Aluminium-Fluoride (z.B. Na₃AlF₆ oder Na₅Al₃F₁₄), Siliziumoxid (SIOₓ), Siliziumdioxid (SiO₂), Neodymfluorid (NdF3), Lanthanfluorid (LaF3), Samariumfluorid (SmF₃), Bariumfluorid (BaF₂), Calciumfluorid (CaF₂), Lithiumfluorid (LiF), organische Monomere und/oder organische Polymere oder Schichten aus Metalloxiden, wie beispielsweise unstöchiometrisches Aluminiumoxid, Kupferoxide, oder Chromoxide und/oder sind aus zumindest einem recycelten metallischen Material aus Druckfarben oder Lacken oder Tinten mit zumindest einem dieser Materialien, hergestellt.

Wie figürlich gezeigt umfasst die Deckschicht 3 an ihrer der Trägerschicht 2 zugewandten Seite eine als Folie ausgebildete Decklage 9. Zudem ist an der der Trägerschicht 2 abgewandten Seite dieser Decklage 9 eine Dekorlage 10, insbesondere ein Druckbild, aufgebracht oder angeordnet. Alternativ ist mittels strichlierter Linien angedeutet, dass es auch denkbar wäre, dass die Dekorlage 10, insbesondere das Druckbild, direkt in der Decklage 9 aufgenommen ist. Zudem wäre es auch denkbar, dass die Deckschicht 3 durch eine Dekorlage 10, insbesondere durch ein Druckbild gebildet ist.

Darüber hinaus zeigt das Ausführungsbeispiel, dass an der der Trägerschicht 2 abgewandten Seite der Deckschicht 3 eine Schutzschicht 11 aus einem Lack gebildet ist, welche Schutzschicht 11 bevorzugt unmittelbar auf die Dekorlage 10 aufgebracht ist. Auch die Schutzschicht 11 kann das zumindest eine recycelte Material 4 und/oder das zumindest eine Material aus nachwachsenden Rohstoffen und/oder das zumindest eine biologisch und/oder marin abbaubare Material 5 enthalten.

Die von der Deckschicht 3 abgewandte Seite der Trägerschicht 2 ist zudem mit einer Siegelschicht 12 aus einem Kunststoff beschichtet, sodass die Trägerschicht 2 zwischen der Deckschicht 3 und der Siegelschicht 12 angeordnet ist. Es wäre jedoch auch denkbar, dass die Deckschicht 3 mit der Siegelschicht 12 beschichtet ist, oder dass die Deckschicht 3 selbst die Siegelschicht 12 bildet. Die Siegelschicht 12 enthält dabei bevorzugt das zumindest eine recycelte Material 4 und/oder das zumindest eine Material aus nachwachsenden Rohstoffen und/oder das zumindest eine biologisch und/oder marin abbaubare Material 5.

Die Fig. 1 und 2 zeigen auch, dass an der der Deckschicht 3 abgewandten Seite der Trägerschicht 2 eine Haftschicht 13 bzw. ein Kaschiermittel 7 anordenbar oder angeordnet ist. Diese Haftschicht 13 ist an einer Oberfläche 14 eines metallischen und/oder eines polymeren Gegenstandes 15 anbringbar, und enthält bevorzugt zumindest ein recyceltes Material 4, und/oder zumindest ein Material aus nachwachsenden Rohstoffen, und/oder zumindest ein biologisch und/oder marin abbaubares Material 5. Bevorzugt ist die Trägerschicht 2 dabei eine Kunststoff-Folie 8 mit zumindest 20% PCR-Material, bevorzugt mit zumindest 50% PCR-Anteil. Es wäre aber auch denkbar und gegebenenfalls zweckmäßig, wenn anstatt des PCR-Materials ein anderes recyceltes und/oder aus nachwachsenden Rohstoffen hergestelltes und/oder biologisch und/oder marin abbaubares Kunststoffmaterial eingesetzt wird.

Insbesondere der Fig. 2 ist ein Ausführungsbeispiel eines Bauteilverbundes 16 gezeigt, welcher einen insbesondere plattenförmig ausgebildeten Gegenstand 15 mit zumindest einer Oberfläche 14 und zumindest ein Dekorelement 1 umfasst. Das zumindest eine Dekorelement 1 ist dabei an der zumindest einen Oberfläche 14 angeordnet und mit dem Gegenstand 15 verbunden.

Zudem ist der der Gegenstand 15 aus einem Werkstoff aus der Gruppe von Holz, Holz-Verbundwerkstoff, Kunststoff, Glas, Metall, Keramik, anorganischen Baustoffen wie Beton, Eternit, oder Zellulose haltige Materialien gewählt, wobei der Werkstoff bevorzugt zumindest ein recyceltes Material 4, und/oder zumindest ein Material aus nachwachsenden Rohstoffen, und/oder zumindest ein biologisch und/oder marin abbaubares Material 5 umfasst.

Das zumindest eine Dekorelement 1 kann beispielsweise an den plattenförmig ausgebildeten Gegenstand 15 angeformt sein, insbesondere auf den Gegenstand 15 aufextrudiert, sein.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Dekorelement
- 2: Trägerschicht
- 3: Deckschicht
- 4: recyceltes Material
- 5: biologisch und/oder marin abbaubares Material
- 6: Verbindungsschicht
- 7: Kaschiermittel
- 8: Kunststoff-Folie
- 9: Decklage
- 10: Dekorlage
- 11: Schutzschicht
- 12: Siegelschicht
- 13: Haftschicht
- 14: Oberfläche
- 15: Gegenstand
- 16: Bauteilverbund
- 17: Sichtseite

## Patentansprüche

1. Dekorelement (1), umfassend eine Trägerschicht (2) und eine an der Trägerschicht (2) angeordnete Deckschicht (3), **dadurch gekennzeichnet, dass** das Dekorelement (1) zumindest ein recyceltes Material (4), und/oder zumindest ein Material aus nachwachsenden Rohstoffen, und/oder zumindest ein biologisch und/oder marin abbaubares Material (5) umfasst.

2. Dekorelement (1) nach Anspruch 1, **dadurch gekennzeichnet, dass** eine Verbindungsschicht (6) vorgesehen ist, mittels welcher Verbindungsschicht (6) die Deckschicht (3) mit der Trägerschicht (2) verbunden ist, welche Verbindungsschicht (6) bevorzugt zumindest ein recyceltes Material (4), und/oder zumindest ein Material aus nachwachsenden Rohstoffen, und/oder zumindest ein biologisch und/oder marin abbaubares Material (5) umfasst.

3. Dekorelement (1) nach einem der vorhergehenden Ansprüche, **dadurch gekennzeichnet, dass** das Dekorelement (1) mindestens 10%, bevorzugt mindestens 20%, besonders bevorzugt mindestens 30%, insbesondere mindestens 50% des zumindest einen recycelten Materials (4) und/oder des zumindest einen Materials aus nachwachsenden Rohstoffen und/oder des zumindest einen biologisch und/oder marin abbaubaren Materials (5) umfasst, oder dass das Dekorelement (1) mindestens 10%, bevorzugt mindestens 20%, besonders bevorzugt mindestens 30%, insbesondere mindestens 50% mehrerer recycelter Materialien und/oder mehrerer Materialien aus nachwachsenden Rohstoffen und/oder mehrerer biologisch und/oder marin abbaubarer Materialien umfasst.

4. Dekorelement (1) nach einem der vorhergehenden Ansprüche, **dadurch gekennzeichnet, dass** das zumindest eine recycelte Material (4), und/oder das zumindest eine Material aus nachwachsenden Rohstoffen, und/oder das zumindest eine biologisch und/oder marin abbaubare Material (5) ein Cellulosefaser-freies Material ist.

5. Dekorelement (1) nach einem der vorhergehenden Ansprüche, **dadurch gekennzeichnet, dass** das Dekorelement (1), insbesondere die Trägerschicht (2), mit zumindest einer Kunststoff-Folie (8), oder als Kunststoff-Folie (8) ausgebildet ist, welche Kunststoff-Folie (8) das zumindest eine recycelte Material (4) und/oder das zumindest eine Material aus nachwachsenden Rohstoffen und/oder das zumindest eine biologisch und/oder marin abbaubare Material (5) umfasst.

6. Dekorelement (1) nach einem der vorhergehenden Ansprüche, **dadurch gekennzeichnet, dass** das zumindest eine recycelte Material (4) und/oder das zumindest eine biologisch und/oder marin abbaubare Material (5) einen chemisch recycelten Kunststoff und/oder einen mechanisch recycelten Kunststoff umfasst, insbesondere einen lichtdurchlässigen, recycelten Kunststoff umfasst, wobei das zumindest eine recycelte Material (4) und/oder das zumindest eine biologisch und/oder marin abbaubare Material (5) bevorzugt zumindest eines der Materialien aus der Gruppe Polyimid (PI), Polypropylen (PP), monoaxial orientiertem Polypropylen (MOPP), biaxial orientierten Polypropylen (BOPP), Polyethylen (PE), Polyphenylensulfid (PPS), Polyetheretherketon (PEEK), Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Glycol-modifiziertes Polyethylenterephthalat (G-PET), amorphes Polyethylenterephthalat (A-PET), Polyamid (PA), Polycarbonat (PC), Cycloolefincopolymere (COC), Polyoximethylen (POM), Acrylnitril-butadien-styrol (ABS), Polyvinylchlorid (PVC) Ethylentetrafluorethylen (ETFE), Polytetrafluorethylen (PTFE), Polyvinylfluorid (PVF), Polyvinylidenfluorid (PVDF) und Ethylen-Tetrafluorethylen-Hexafluorpropylen-Fluorterpolymer (EFEP), Polymethylmethacrylat (PMMA), Cellulose- oder Lignin-basierte Kunststoffe, Polyhydroxyalkanoate (PHA), thermo-plastische Stärke (TPS), Polymilchsäure (PLA), Polycaprolacton (PCL), Polybuty-lensuccinat (PBS), und Polybutylenadipat-terephthalat (PBAT) und/oder Mischungen und/oder Co-Polymere und/oder Verbundmaterialien dieser Materialien umfasst oder aus zumindest einem dieser Materialien hergestellt ist.

7. Dekorelement (1) nach einem der vorhergehenden Ansprüche, **dadurch gekennzeichnet, dass** das zumindest eine recycelte Material (4) und/oder das zumindest eine biologisch und/oder marin abbaubare Material (5) zumindest ein recyceltes metallisches Material, insbesondere ausgewählt aus der Gruppe Silber, Kupfer, Aluminium, Gold, Platin, Niob, Zinn, oder aus Nickel, Titan, Vanadium, Chrom, Kobalt und Palladium oder Legierungen dieser Materialien, insbesondere Kobalt-Nickel-Legierungen, und/oder zumindest ein dielektrisches Material, insbesondere ausgewählt aus der Gruppe Zinksulfid (ZnS), Zinkoxid (ZnO), Zinkchromat (ZnCrO₄), Titandioxid (TiO₂), Kohlenstoff (C), Indiumoxid (In₂O₃), Indium-Zinn-Oxid (ITO), Antimon-Zinn-Oxid (ATO), Fluor-Zinn-Oxid (FTO), Tantalpentoxid (Ta₂O₅), Ceroxid (CeO₂), Yttriumoxid (Y₂O₃), Europiumoxid (Eu₂O₃), Eisenoxide wie zum Beispiel Eisen(II,III)oxid (Fe₃O₄) und Eisen(III)oxid (Fe₂O₃), Hafniumnitrid (HfN), Hafniumcarbid (HfC), Hafniumoxid (HfO₂), Lanthanoxid (La₂O₃), Magnesiumoxid (MgO), Neodymoxid (Nd₂O₃), Praseodymoxid (Pr₆O₁₁), Samariumoxid (Sm₂O₃), Antimontrioxid (Sb₂O₃), Siliziumcarbid (SiC), Siliziumnitrid (Si₃N₄), Siliziummonoxid (SiO), Selentrioxid (Se₂O₃), Zinnoxid (SnO₂), Wolframtrioxid (WO₃), Bismut(III)oxid (Bi₂O₃), Aluminiumoxid (Al₂O₃), Metallfluoride, beispielsweise Magnesiumfluorid (MgF₂), Aluminiumfluorid (AlF₃), Cerfluorid (CeF₃), Natrium-Aluminium-Fluoride (z.B. Na₃AlF₆ oder Na₅Al₃F₁₄), Siliziumoxid (SIOₓ), Siliziumdioxid (SiO₂), Neodymfluorid (NdF3), Lanthanfluorid (LaF3), Samariumfluorid (SmF₃), Bariumfluorid (BaF₂), Calciumfluorid (CaF₂), Lithiumfluorid (LiF), organische Monomere und/oder organische Polymere oder Schichten aus Metalloxiden, wie beispielsweise unstöchiometrisches Aluminiumoxid, Kupferoxide, oder Chromoxide umfasst, und/oder aus zumindest einem recycelten metallischen Material aus Druckfarben oder Lacken oder Tinten insbesondere mit zumindest einem dieser Materialien, hergestellt ist.

8. Dekorelement (1) nach einem der vorhergehenden Ansprüche, **dadurch gekennzeichnet, dass** die Deckschicht (3) an ihrer der Trägerschicht (2) zugewandten Seite eine als Folie ausgebildete Decklage (9) umfasst, und dass an der der Trägerschicht (2) abgewandten Seite der Decklage (9) eine Dekorlage (10), insbesondere ein Druckbild, aufgebracht oder angeordnet ist, oder dass die Dekorlage (10), insbesondere das Druckbild, in der Decklage (9) aufgenommen ist.

9. Dekorelement (1) nach einem der Ansprüche 1 bis 7, **dadurch gekennzeichnet, dass** die Deckschicht (3) durch eine Dekorlage (10) gebildet ist, insbesondere durch ein Druckbild gebildet ist.

10. Dekorelement (1) nach einem der vorhergehenden Ansprüche, **dadurch gekennzeichnet, dass** an der von der Trägerschicht (2) abgewandten Seite der Deckschicht (3) eine Schutzschicht (11), insbesondere aus einem Lack, gebildet ist, welche Schutzschicht (11) bevorzugt auf die Dekorlage (10) aufgebracht ist, und welche Schutzschicht (11) das zumindest eine recycelte Material (4) und/oder das zumindest eine Material aus nachwachsenden Rohstoffen und/oder das zumindest eine biologisch und/oder marin abbaubare Material (5) umfasst.

11. Dekorelement (1) nach einem der vorhergehenden Ansprüche, **dadurch gekennzeichnet, dass** die von der Deckschicht (3) abgewandte Seite der Trägerschicht (2) mit einer Siegelschicht (12), insbesondere aus einem Kunststoff, beschichtet ist, sodass die Trägerschicht (2) zwischen der Deckschicht (3) und der Siegelschicht (12) angeordnet ist, oder dass die Deckschicht (3) mit der Siegelschicht (12) beschichtet ist, oder dass die Deckschicht (3) selbst die Siegelschicht (12) bildet, wobei die Siegelschicht (12) das zumindest eine recycelte Material (4) und/oder das zumindest eine Material aus nachwachsenden Rohstoffen und/oder das zumindest eine biologisch und/oder marin abbaubare Material (5) umfasst.

12. Dekorelement (1) nach einem der vorhergehenden Ansprüche, **dadurch gekennzeichnet, dass** an der von der Deckschicht (3) abgewandten Seite der Trägerschicht (2) eine Haftschicht (13) anordenbar oder angeordnet ist, welche Haftschicht (13) an einer Oberfläche (14) eines metallischen und/oder eines polymeren Gegenstandes (15) anbringbar ist, und welche Haftschicht (13) bevorzugt zumindest ein recyceltes Material (4), und/oder zumindest ein Material aus nachwachsenden Rohstoffen, und/oder zumindest ein biologisch und/oder marin abbaubares Material (5) umfasst, wobei die Trägerschicht (2) eine Kunststoff-Folie (8) mit zumindest 20% aus recyceltem und/oder aus nachwachsenden Rohstoffen hergestelltem und/oder biologisch und/oder marin abbaubarem Kunststoffmaterial, insbesondere einem PCR-Material, bevorzugt mit zumindest 50% PCR-Anteil, ist.

13. Bauteilverbund (16) umfassend einen insbesondere plattenförmig ausgebildeten Gegenstand (15) mit zumindest einer Oberfläche (14) und zumindest ein Dekorelement (1), wobei das zumindest eine Dekorelement (1) an der zumindest einen Oberfläche (14) angeordnet und mit dem Gegenstand (15) verbunden ist, **dadurch gekennzeichnet, dass** das Dekorelement (1) nach einem der vorhergehenden Ansprüche ausgebildet ist.

14. Bauteilverbund (16) nach Anspruch 13, **dadurch gekennzeichnet, dass** der Gegenstand (15) aus einem Werkstoff aus der Gruppe von Holz, Holz-Verbundwerkstoff, Kunststoff, Glas, Metall, Keramik, anorganischen Baustoffen wie Beton, Eternit, oder Zellulose haltige Materialien gewählt ist, und dass der Werkstoff bevorzugt zumindest ein recyceltes Material (4), und/oder zumindest ein Material aus nachwachsenden Rohstoffen, und/oder zumindest ein biologisch und/oder marin abbaubares Material (5) umfasst.

15. Bauteilverbund (16) nach einem der Ansprüche 13 bis 14, **dadurch gekennzeichnet, dass** das zumindest eine Dekorelement (1) an den plattenförmig ausgebildeten Gegenstand (15) angeformt, insbesondere auf den Gegenstand (15) aufextrudiert, ist.

16. Bauteilverbund (16) nach einem Ansprüche 13 bis 15, **dadurch gekennzeichnet, dass** an der der Deckschicht (3) abgewandten Seite der Trägerschicht (2) eine Haftschicht (13) angeordnet ist, und welche Haftschicht (13) bevorzugt zumindest ein recyceltes Material (4), und/oder zumindest ein Material aus nachwachsenden Rohstoffen, und/oder zumindest ein biologisch und/oder marin abbaubares Material (5) umfasst, wobei die Trägerschicht (2) eine Kunststoff-Folie (8) mit zumindest 20% aus recyceltem und/oder aus nachwachsenden Rohstoffen hergestelltem und/oder biologisch und/oder marin abbaubarem Kunststoffmaterial, insbesondere einem PCR-Material, bevorzugt mit zumindest 50% PCR-Anteil, ist.
